(19) Europäisches Patentamt European Patent Office Office européen des brevets

(11) **EP 3 276 025 B1**

(12) **EUROPEAN PATENT SPECIFICATION**

(45) Date of publication and mention of the grant of the patent:
**01.05.2019 Bulletin 2019/18**

(21) Application number: **16768074.3**

(22) Date of filing: **25.03.2016**

(51) Int Cl.:
*C22C 38/00* (2006.01)   *C21D 8/02* (2006.01)
*C22C 38/14* (2006.01)   *C22C 38/58* (2006.01)
*C22C 38/02* (2006.01)   *C22C 38/04* (2006.01)
*C22C 38/06* (2006.01)   *C22C 38/08* (2006.01)
*C22C 38/12* (2006.01)   *C22C 38/16* (2006.01)
*C22C 38/18* (2006.01)   *C22C 38/22* (2006.01)
*C22C 38/24* (2006.01)   *C22C 38/26* (2006.01)
*C22C 38/28* (2006.01)   *C22C 38/32* (2006.01)
*C22C 38/40* (2006.01)   *C22C 38/42* (2006.01)
*C22C 38/44* (2006.01)   *C21D 9/46* (2006.01)

(86) International application number:
**PCT/JP2016/001764**

(87) International publication number:
**WO 2016/152171 (29.09.2016 Gazette 2016/39)**

(54) **STEEL PLATE FOR STRUCTURAL PIPE, METHOD FOR PRODUCING STEEL PLATE FOR STRUCTURAL PIPE, AND STRUCTURAL PIPE**

STAHLPLATTE FÜR EIN STRUKTURROHR, VERFAHREN ZUR HERSTELLUNG EINER STAHLPLATTE FÜR EIN STRUKTURROHR UND STRUKTURROHR

TÔLE D'ACIER POUR TUBE DE CONSTRUCTION, PROCÉDÉ DE FABRICATION DE TÔLE D'ACIER POUR TUBE DE CONSTRUCTION, ET TUBE DE CONSTRUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.03.2015 PCT/JP2015/001753**

(43) Date of publication of application:
**31.01.2018 Bulletin 2018/05**

(73) Proprietor: **JFE Steel Corporation**
**Tokyo 100-0011 (JP)**

(72) Inventors:
• **OTA, Shusaku**
**Tokyo 100-0011 (JP)**
• **SHIMAMURA, Junji**
**Tokyo 100-0011 (JP)**
• **ISHIKAWA, Nobuyuki**
**Tokyo 100-0011 (JP)**

• **ENDO, Shigeru**
**Tokyo 100-0011 (JP)**
• **YASUDA, Kyono**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 799 567**   **JP-A- 2006 124 775**
**JP-A- 2006 307 324**   **JP-A- 2006 307 324**
**JP-A- 2007 231 409**   **JP-A- 2007 270 194**
**JP-A- 2009 127 069**   **JP-A- 2009 174 024**
**JP-A- 2009 174 024**   **JP-A- 2010 138 421**
**JP-A- 2010 138 421**   **JP-A- 2010 235 986**
**JP-A- 2012 126 925**   **JP-A- 2013 204 103**
**JP-B2- 5 472 071**

**Description**

TECHNICAL FIELD

This disclosure relates to a steel plate for structural pipes or tubes, and in particular, to a steel plate for structural pipes or tubes that has strength of API X100 grade or higher, that has only a small difference between strength in a rolling direction and strength in a direction perpendicular to the rolling direction, and that exhibits high material homogeneity.
This disclosure also relates to a method of producing a steel plate for structural pipes or tubes, and to a structural pipe or tube produced from the steel plate for structural pipes or tubes.

BACKGROUND

For excavation of oil and gas by seabed resource drilling ships and the like, structural pipes or tubes such as conductor casing steel pipes or tubes, riser steel pipes or tubes, and the like are used. In these applications, there has been an increasing demand for high-strength steel pipes or tubes of no lower than American Petroleum Institute (API) X100 grade from the perspectives of improving operation efficiency with increased pressure and reducing material costs.
Such structural pipes or tubes are often used with forged products containing alloying elements in very large amounts (such as connectors) subjected to girth welding. For a forged product subjected to welding, post weld heat treatment (PWHT) is performed to remove the residual stress caused by the welding from the forged product. In this case, there may be a concern about deterioration of mechanical properties such as strength after heat treatment. Accordingly, structural pipes or tubes are required to retain excellent mechanical properties, in particular high strength, in their longitudinal direction, that is, rolling direction, even after subjection to PWHT in order to prevent fractures during excavation by external pressure on the seabed.
Thus, for example, JPH1150188A (PTL 1) proposes a process for producing a high-strength steel plate for riser steel pipes or tubes that can exhibit excellent strength even after subjection to stress relief (SR) annealing, which is one type of PWHT, at a high temperature of 600 °C or higher, by hot-rolling a steel to which 0.30 % to 1.00 % of Cr, 0.005 % to 0.0030 % of Ti, and 0.060 % or less of Nb are added, and then subjecting it to accelerated cooling.
In addition, JP2001158939A (PTL 2) proposes a welded steel pipe or tube that has a base steel portion and weld metal with chemical compositions in specific ranges and both having a yield strength of 551 MPa or more. PTL 2 describes that the welded steel pipe or tube has excellent toughness before and after SR in the weld zone.
Moreover, PTL3 describes a high strength and high toughness steel plate that is excellent in crack resistance by cutting, and its manufacturing method. The usage and field of application is OCTG, API x 120 Grade.

CITATION LIST

Patent Literature

PTL 1: JPH1150188A
PTL 2:JP2001158939A
PTL3: JP 2006 307324 A

SUMMARY

(Technical Problem)

In the steel plate described in PTL 1, however, Cr carbide is caused to precipitate during PWHT in order to compensate for the decrease in strength due to PWHT, which requires adding a large amount of Cr. Accordingly, in addition to high material cost, weldability and toughness may deteriorate.
In addition, the steel pipes or tubes described in PTL 2 focus on improving the characteristics of seam weld metal, without giving consideration to the base steel, and inevitably involve decrease in the strength of the base steel by PWHT. To secure the strength of the base steel, it is necessary to increase the strength before performing PWHT by controlled rolling or accelerated cooling.
Furthermore, a steel sheet for structural pipes or tubes is required to have a reduced difference between strength in a rolling direction and a direction perpendicular to the rolling direction (exhibit excellent material homogeneity) for the following reasons. Specifically, the strength of a weld joint (weld metal portion) of a steel pipe or tube is generally designed to be higher than that of the base metal of the steel pipe or tube. This design philosophy is also called over-matching. When the installed steel pipe or tube is deformed or fractured for some reason, the deformation or fracture will start from the base metal of the steel pipe or tube, not from the weld joint, if the over-matching is applied. Since the base metal is higher in material reliability than the weld joint in the steel pipe or tube, over-matching can increase the safety of the pipe or tube to be laid.

Structural pipes or tubes are subjected to seam welding, which is carried out when manufacturing steel pipes or tubes from steel plates, and to girth welding for connecting individual steel pipes or tubes. Thus, over-matching is required in both joints subjected to seam welding and those to girth welding. In other words, it is necessary for a joint subjected to seam welding to have strength that is higher than the strength in a direction perpendicular to a rolling direction of the steel plate, and for a joint subjected to girth welding to have strength that is higher than the strength in the rolling direction of the steel plate. In this respect, it is preferable if the difference between the strength in the rolling direction of the steel plate and the strength in the direction perpendicular to the rolling direction is small, because over-matching of the joints subjected to seam welding and girth welding can be implemented simply by applying welding in substantially the same or a similar way.

The present disclosure could thus be helpful to provide, as a high-strength steel plate of API XI00 grade or higher, a steel plate for structural pipes or tubes that exhibits high strength in the rolling direction and that has only a small difference between strength in the rolling direction and strength in a direction perpendicular to the rolling direction (exhibits excellent material homogeneity), without addition of large amounts of alloying elements. The present disclosure could also be helpful to provide a method of producing the above-described steel plate for structural pipes or tubes, and a structural pipe or tube produced from the steel plate for structural pipes or tubes.

SUMMARY

For steel plates for structural pipes or tubes, we conducted detailed studies on the influence of rolling conditions on their microstructures in order to determine how to balance material homogeneity and strength. In general, the steel components for welded steel pipes or tubes and steel plates for welded structures are strictly limited from the viewpoint of weldability. Thus, high-strength steel plates of X65 grade or higher are manufactured by being subjected to hot rolling and subsequent accelerated cooling. Thus, the steel plate has a microstructure that is mainly composed of bainite or a microstructure in which martensite austenite constituent (abbreviated "MA") is formed in bainite. However, when performing PWHT on a steel having such a microstructure, martensite in bainite is decomposed through tempering, and deterioration of strength would be inevitable. Another method has been proposed to precipitate Cr carbides and the like at the time of PWHT in order to compensate for a decrease in strength due to tempering. In this method, however, carbide easily coarsens, causing deterioration in toughness. It is thus clear that there is a limit to securing strength and toughness even after PWHT by means of transformation strengthening. In view of the above, we conducted intensive studies on a microstructure capable of exhibiting excellent resistance to PWHT, high strength, and good material homogeneity, and as a result, arrived at the following findings:

(a) To improve resistance to PWHT, it is necessary to make the microstructure of steel free from morphological change before and after PWHT. To this end, it is recommended to reduce the amount of martensite austenite constituent decomposed through PWHT, and to precipitate the carbon in the steel dispersedly as a thermally stable fine carbide.
(b) To obtain a steel plate having high strength and excellent material homogeneity, in accelerated cooling after hot rolling, it is recommended to stop cooling at a temperature as low as possible, and then to perform rapid heating immediately thereafter. The steel immediately after the stoppage of the accelerated cooling has a bainite microstructure that is low in MA content and high in dislocation density. However, through the subsequent reheating process, movable dislocations being locked by solute C, and the resulting steel plate may have excellent material homogeneity.

Based on the above findings, we made intensive studies on the chemical compositions and microstructures of steel as well as on the production conditions, and completed the present disclosure.

Specifically, the primary features of the present disclosure are as described below.

1. A steel plate for structural pipes or tubes, comprising: a chemical composition that contains (consists of), in mass%, C: 0.060 % to 0.100 %, Si: 0.01 % to 0.50 %, Mn: 1.50 % to 2.50 %, Al: 0.080 % or less, Mo: 0.10 % to 0.50 %, Ti: 0.005 % to 0.025 %, Nb: 0.005 % to 0.080 %, N: 0.001 % to 0.010 %, O: 0.0050 % or less, P: 0.010 % or less, S: 0.0010 % or less, optionally V: 0.005 % to 0.100 %, optionally one or more selected from the group consisting of Cu: 0.50 % or less, Ni: 0.50 % or less, Cr: 0.50 % or less, Ca: 0.0005 % to 0.0035 %, REM: 0.0005 % to 0.0100 %, and B: 0.0020 % or less, and the balance consisting of Fe and inevitable impurities, with the chemical composition satisfying a set of conditions including: a ratio Ti/N of the Ti content in mass% to the N content in mass% being 2.5 or more and 4.0 or less; a carbon equivalent $C_{eq}$ as defined by the following Expression (1) being 0.45 or more and 0.50 or lower; X as defined by the following Expression (2) being 0.10 or more and less than 0.30; and Y as defined by the following Expression (3) being 0.15 or more and 0.50 or less:

$$C_{eq} = C + Mn/6 + (Cu + Ni)/15 + (Cr + Mo + V)/5 \qquad (1),$$

where each element symbol indicates content in mass% of the element in the steel plate and has a value of 0 if the element is not contained in the steel plate,

$$X = (C + Mo/5)/C_{eq} \qquad (2),$$

$$Y = [Mo] + [Ti] + [Nb] + [V] \qquad (3),$$

where [M] represents the content in atomic% of element M in the steel plate and [M] = 0 when the element M is not contained in the steel plate; and a microstructure that is mainly composed of bainite and that contains martensite austenite constituent in an area fraction of less than 3.0 %, wherein the steel

plate satisfies a set of conditions including: a tensile strength in a rolling direction $TS_L$ being 760 MPa or more; and $TS_C$ - $TS_L$ being 30 MPa or less in terms of absolute value, where $TS_C$ denotes a tensile strength in a direction orthogonal to the rolling direction.

2. A method of producing a steel plate for structural pipes or tubes, comprising at least: heating a steel raw material having the chemical composition as recited in 1. to a heating temperature of 1100 °C to 1300 °C; hot-rolling the heated steel raw material to obtain a hot-rolled steel plate; accelerated-cooling the hot-rolled steel plate under a set of conditions including, a cooling start temperature being no lower than $Ar_3$ as defined below and (Ar3 + 100) °C or lower, a cooling end temperature being lower than 300 °C, and an average cooling rate being 20 °C/s or higher:

$$Ar_3 \ (°C) = 910 - 310 \ C - 80 \ Mn - 20 \ Cu - 15 \ Cr - 55 \ Ni - 80 \ Mo,$$

where each element symbol indicates content in mass% of the element in the steel plate and has a value of 0 if the element is not contained in the steel plate; and within 120 seconds after the accelerated cooling, starting reheating the steel plate to 300 °C to 550 °C at a heating rate from 0.5 °C/s to 10 °C/s.

3. A structural pipe or tube formed from the steel plate for structural pipes or tubes as recited in 1..

4. A method of producing a structural pipe or tube, comprising the steps of forming the steel plate for structural pipes or tubes as recited in 1. into a tubular shape in its longitudinal direction, and then joining butting faces by welding from inside and outside to form at least one layer on each side along the longitudinal direction.

(Advantageous Effect)

According to the present disclosure, it is possible to provide, as a high-strength steel plate of API X100 grade or higher, a steel plate for structural pipes or tubes that exhibits high strength in the rolling direction and that has only a small difference between strength in the rolling direction and strength in a direction perpendicular to the rolling direction (exhibits excellent material homogeneity), without addition of large amounts of alloying elements

DETAILED DESCRIPTION

[Chemical Composition]

Reasons for limitations on the features of the disclosure will be explained below.

In the present disclosure, it is important that a steel plate for structural pipes or tubes has a specific chemical composition. The reasons for limiting the chemical composition of the steel as stated above are explained first. The % representations below indicating the chemical composition are in mass% unless otherwise noted.

C: 0.060 % to 0.100 %

C is an element for increasing the strength of steel. To obtain a desired microstructure for desired strength and toughness, the C content needs to be 0.060 % or more. However, if the C content exceeds 0.100 %, weldability deteriorates, weld cracking tends to occur, and the toughness of base steel and HAZ toughness are lowered. Therefore, the C content is set to 0.100 % or less. The C content is preferably 0.060 % to 0.080 %.

Si: 0.01 % to 0.50 %

Si is an element that acts as a deoxidizing agent and increases the strength of the steel material by solid solution strengthening. To obtain this effect, the Si content is set to 0.01 % or more. However, Si content of greater than 0.50 % causes noticeable deterioration in HAZ toughness. Therefore, the Si content is set to 0.50 % or less. The Si content is preferably 0.05 % to 0.20 %.

Mn: 1.50 % to 2.50 %

Mn is an effective element for increasing the hardenability of steel and improving strength and toughness. To obtain this effect, the Mn content is set to 1.50 % or more. However, Mn content of greater than 2.50 % causes deterioration of weldability. Therefore, the Mn content is set to 2.50 % or less. The Mn content is preferably from 1.80 % to 2.00 %.

Al: 0.080 % or less

Al is an element that is added as a deoxidizer for steelmaking. However, Al content of greater than 0.080 % leads to reduced toughness. Therefore, the Al content is set to 0.080 % or less. The Al content is preferably from 0.010 % to 0.050 %.

Mo: 0.10 % to 0.50 %

Mo is a particularly important element for the present disclosure that functions to greatly increase the strength of the steel plate by forming fine complex carbides with Ti, Nb, and V, while suppressing pearlite transformation during cooling after hot rolling. To obtain this effect, the Mo content is set to 0.10 % or more. However, Mo content of greater than 0.50 % leads to reduced toughness at the heat-affected zone (HAZ). Therefore, the Mo content is set to 0.50 % or less.

Ti: 0.005 % to 0.025 %

In the same way as Mo, Ti is a particularly important element for the present disclosure that forms complex precipitates with Mo and greatly contributes to improvement in the strength of steel. To obtain this effect, the Ti content is set to 0.005 % or more. However, adding Ti beyond 0.025 % leads to deterioration in HAZ toughness and toughness of base steel. Therefore, the Ti content is set to 0.025 % or less.

Nb: 0.005 % to 0.080 %

Nb is an effective element for improving toughness by refining microstructural grains. In addition, Nb forms composite precipitates with Mo and contributes to improvement in strength. To obtain this effect, the Nb content is set to 0.005 % or more. However, Nb content of greater than 0.080 % causes deterioration of HAZ toughness. Therefore, the Nb content is set to 0.080 % or less.

N: 0.001 % to 0.010 %

N is normally present in the steel as an inevitable impurity and, in the presence of Ti, forms TiN. To suppress coarsening of austenite grains caused by the pinning effect of TiN, the N content is set to 0.001 % or more. However, TiN decomposes in the weld zone, particularly in the region heated to 1450 °C or higher near the weld bond, and produces solute N. Accordingly, if the N content is excessively increased, a decrease in toughness due to the formation of the solute N becomes noticeable. Therefore, the N content is set to 0.010 % or less. The N content is more preferably 0.002 % to 0.005 %.

Further, by setting a ratio Ti/N of the Ti content to the N content to 2.5 or more and 4.0 or less, the effect of TiN can be sufficiently obtained. From the perspective of more effectively providing the pinning effect by TiN, the ratio Ti/N is preferably 2.6 or more, and more preferably 3.8 or less.

O: 0.0050 % or less, P: 0.010 % or less, S: 0.0010 % or less

In the present disclosure, O, P, and S are inevitable impurities, and the upper limit for the contents of these elements is defined as follows. O forms coarse oxygen inclusions that adversely affect toughness. To suppress the influence of the inclusions, the O content is set to 0.0050 % or less. In addition, P lowers the toughness of the base metal upon central segregation, and a high P content causes the problem of reduced toughness of base metal. Therefore, the P content is set to 0.010 % or less. In addition, S forms MnS inclusions and lowers the toughness of base metal, and a high S content causes the problem of reduced toughness of the base material. Therefore, the S content is set to 0.0010 % or less. It is noted here that the O content is preferably 0.0030 % or less, the P content is preferably 0.008 % or less, and the S content is preferably 0.0008 % or less. No lower limit is placed on the contents of O, P, and S, yet in industrial terms the lower limit is more than 0 %. On the other hand, excessively reducing the contents of these elements leads to longer refining time and increased cost. Therefore, the O content is 0.0005 % or more, the P content is 0.001 % or more, and the S content is 0.0001 % or more.

In addition to the above elements, the steel plate for structural pipes or tubes disclosed herein may further contain V: 0.005 % to 0.100 %.

V: 0.005 % to 0.100 %

In the same way as Nb, V forms composite precipitates with Mo and contributes to improvement in strength. When V is added, the V content is set to 0.005 % or more to obtain this effect. However, V content of greater than 0.100 % causes deterioration of HAZ toughness. Therefore, when V is added, the V content is set to 0.100 % or less.

In addition to the above elements, the steel plate for structural pipes or tubes may further contain Cu: 0.50 % or less, Ni: 0.50 % or less, Cr: 0.50 % or less, Ca: 0.0005 % to 0.0035 %, REM: 0.0005 to 0.0100 %, and B: 0.0020 % or less.

Cu: 0.50 % or less

Cu is an effective element for improving toughness and strength, yet excessively adding Cu causes deterioration of weldability. Therefore, when Cu is added, the Cu content is set to 0.50 % or less. No lower limit is placed on the Cu content, yet when Cu is added, the Cu content is preferably 0.05 % or more.

Ni: 0.50 % or less

Ni is an effective element for improving toughness and strength, yet excessively adding Ni causes deterioration of resistance to PWHT. Therefore, when Ni is added, the Ni content is set to 0.50 % or less. No lower limit is placed on the Ni content, yet when Ni is added, the Ni content is preferably to 0.05 % or more.

Cr: 0.50 % or less

In the same way as Mn, Cr is an effective element for obtaining sufficient strength even with a low C content, yet excessive addition lowers weldability. Therefore, when Cr is added, the Cr content is set to 0.50 % or less. No lower limit is placed on the Cr content, yet when Cr is added, the Cr content is preferably set to 0.05 % or more.

Ca: 0.0005 % to 0.0035 %

Ca is an effective element for improving toughness by morphological control of sulfide inclusions. To obtain this effect, when Ca is added, the Ca content is set to 0.0005 % or more. However, adding Ca beyond 0.0035 % does not increase the effect, but rather leads to a decrease in the cleanliness of the steel, causing deterioration of toughness. Therefore, when Ca is added, the Ca content is set to 0.0035 % or less.

REM: 0.0005 % to 0.0100 %

In the same way as Ca, a REM (rare earth metal) is an effective element for improving toughness by morphological control of sulfide inclusions in the steel. To obtain this effect, when a REM is added, the REM content is set to 0.0005 % or more. However, excessively adding a REM beyond 0.0100 % does not increase the effect, but rather leads to a decrease in the cleanliness of the steel, causing deterioration of toughness. Therefore, the REM is set to 0.0100 % or less.

B: 0.0020 % or less

B segregates at austenite grain boundaries and suppresses ferrite transformation, thereby contributing particularly to preventing decrease in HAZ strength. However, adding B beyond 0.0020 % does not increase the effect. Therefore, when B is added, the B content is set to 0.0020 % or less. No lower limit is placed on the B content, yet when B is added, the B content is preferably 0.0002 % or more.

The steel plate for structural pipes or tubes disclosed herein consists of the above-described components and the balance of Fe and inevitable impurities. As used herein, the phrase "consists of ... the balance of Fe and inevitable impurities" is intended to encompass a chemical composition that contains inevitable impurities and other trace elements as long as the action and effect of the present disclosure are not impaired.

In the present disclosure, it is important that all of the elements contained in the steel satisfy the above-described conditions and that the chemical composition has a carbon equivalent $C_{eq}$ of 0.45 or more, where $C_{eq}$ is defined by:

$$C_{eq} = C + Mn/6 + (Cu + Ni)/15 + (Cr + Mo + V)/5 \qquad (1)$$

, where each element symbol indicates content in mass% of the element in the steel plate and has a value of 0 if the element is not contained in the steel plate.

$C_{eq}$ is expressed in terms of carbon content representing the influence of the elements added to the steel, which is commonly used as an index of strength as it correlates with the strength of base metal. In the present disclosure, to obtain a high strength of API X100 grade or higher, $C_{eq}$ is set to 0.45 or more. $C_{eq}$ is preferably 0.46 or more. $C_{eq}$ has an upper limit of 0.50.

To reduce the amount of martensite austenite constituent decomposed through PWHT, it is important to set a parameter X defined by the following Expression (2) to less than 0.30:

$$X = (C + Mo/5)/C_{eq} \qquad (2),$$

where X denotes the ratio of the C and Mo contents to the carbon equivalent $C_{eq}$, and if these elements are excessively added, martensite austenite constituent is likely to be formed. In the present disclosure, formation of martensite austenite constituent is suppressed by reheating after accelerated cooling, yet in order to obtain a specific amount of martensite austenite constituent, the parameter X needs to be less than 0.30. The parameter X is preferably 0.28 or less, more preferably 0.27 or less. Further, the parameter X is 0.10 or more.

Further, in the present disclosure, it is important that a parameter Y defined by the following Expression (3) is 0.15 or more:

$$Y = [Mo] + [Ti] + [Nb] + [V] \qquad (3),$$

where [M] represents the content in atomic% of element M in the steel plate and [M] = 0 when the element M is not contained in the steel plate.

The parameter Y is an index of strengthening by precipitation. In the present disclosure, Y is set to 0.15 or more to obtain a strength equal to or higher than API XI00 grade. Preferably, Y is 0.18 % or more. On the other hand, the upper limit of Y is 0.50.

The value of Y defined by Expression (3), that is, the total content in atomic% of Mo, Ti, Nb, and V is obtained by dividing the sum of Mo, Ti, Nb, and V atoms by the total number of all elements contained in the steel. Alternatively, using the contents in mass% of Mo, Ti, Nb, and V, the value of Y may be obtained by the following Expression (4):

$$Y = (Mo/95.9 + Nb/92.91 + V/50.94 + Ti/47.9)/(100/55.85) * 100 \qquad (4),$$

where each element symbol indicates content in mass% of the element in the steel plate and has a value of 0 if the element is not contained in the steel plate,

[Microstructure]

Next, the reasons for limitations on the steel microstructure according to the disclosure are described.

In the present disclosure, it is important for the steel plate to have a microstructure that is mainly composed of bainite and that contains martensite austenite constituent in an area fraction of less than 3.0 %. Controlling the microstructure in this way makes it possible to provide high strength of API X100 grade. If these microstructural conditions are satisfied, it is considered that the resulting microstructure meets the microstructural conditions substantially over the entire thickness, and the effects of the present disclosure may be obtained.

As used herein, the phrase "mainly composed of bainite" indicates that the area fraction of bainite in the microstructure of the steel plate is 90 % or more. On the other hand, the total area fraction of bainite is desirably as high as possible without any particular upper limit. The area fraction of bainite may be 100 %.

The amount of microstructure other than bainite is preferably as small as possible. However, when the area fraction of bainite is sufficiently high, the influence of the residual microstructure is almost negligible, and an acceptable total area fraction of one or more of the microstructure other than bainite in the microstructure is up to 20 %. A preferred total area fraction of the microstructure other than bainite is up to 10 %. Examples of the residual microstructure include pearlite, cementite, ferrite, and martensite.

However, even in a case where the microstructure is mainly composed of bainite, if martensite austenite constituent is contained in the bainite, the martensite austenite constituent decomposes during PWHT, causing a decrease in strength. Thus, the area fraction of martensite austenite constituent in the microstructure of the steel plate needs to be less than 3.0 %. Preferably, the area fraction of martensite austenite constituent is 2 % or less. On the other hand, the area fraction of martensite austenite constituent is preferably as low as possible without any particular lower limit, and may be 0 % or more.

The area fraction of bainite and martensite austenite constituent may be determined by mirror-polishing a sample taken from the mid-thickness part, etching its surface with nital, and observing ten or more locations randomly selected on the surface under a scanning electron microscope (at 2000 times magnification).

[Mechanical Properties]

The steel plate for structural pipes or tubes disclosed herein has mechanical properties including: a tensile strength in a rolling direction $TS_L$ of 760 MPa or more; and $TS_C$ - $TS_L$ being 30 MPa or less in terms of absolute value, where $TS_C$ denotes a tensile strength in a direction orthogonal to the rolling direction. $TS_L$ and $TS_C$ can be measured by the method described in the Examples as explained below. $TS_L$ is preferably 790 MPa or more, and the absolute value of ($TS_C$ - $TS_L$) is preferably 20 MPa or less. On the other hand, no upper limit is placed on $TS_L$, yet the upper limit is, for example, 990 MPa for X100 grade and 1145 MPa for X120 grade. The absolute value of ($TS_C$ - $TS_L$) is preferably as small as possible without any lower limit, and may be 0 or more. The subtraction of ($TS_C$ - $TS_L$) may yield a negative result.

As described above, since the difference between $TS_C$ and $TS_L$ is small in the steel plate for structural pipes or tubes according to the disclosure, a steel pipe or tube formed from the disclosed steel plate easily provides overmatching of joints subjected to seam welding and girth welding, and thus exhibits excellent properties as a structural pipe or tube.

[Steel Plate Production Method]

Next, a method of producing a steel plate according to the present disclosure is described. In the following explanation, the temperature is the average temperature in the thickness direction of the steel plate unless otherwise noted. The average temperature in the plate thickness direction can be determined by, for example, the plate thickness, surface temperature, or cooling conditions through simulation calculation or the like. For example, the average temperature in the plate thickness direction of the steel plate can be determined by calculating the temperature distribution in the plate thickness direction using a finite difference method.

The steel plate for structural pipes or tubes disclosed herein may be produced by sequentially performing operations (1) to (4) below on the steel raw material having the above chemical composition.

(1) heating the steel raw material to a heating temperature of 1100 °C to 1300 °C;
(2) hot-rolling the heated steel material to obtain a hot-rolled steel plate;
(3) accelerated-cooling the hot-rolled steel plate to under a set of conditions including, a cooling start temperature being no lower than $Ar_3$, a cooling end temperature being lower than 300 °C, and an average cooling rate being 20 °C/s or higher; and
(4) immediately after the accelerated cooling, reheating the steel plate to a temperature range of 300 °C to 550 °C at a heating rate from 0.5 °C/s to 10 °C/s.

Specifically, the above-described operations may be performed as described below.

[Steel Raw Material]

The above-described steel raw material may be prepared with a regular method. The method of producing the steel raw material is not particularly limited, yet the steel raw material is preferably prepared with continuous casting.

[Heating]

The steel raw material is heated prior to rolling. At this time, the heating temperature is set from 1100 °C to 1300 °C. Setting the heating temperature to 1100 °C or higher makes it possible to cause carbides in the steel raw material to dissolve, and to obtain the target strength. The heating temperature is preferably set to 1120 °C or higher. However, a heating temperature of higher than 1300 °C coarsens austenite grains and the final steel microstructure, causing deterioration of toughness. Therefore, the heating temperature is set to 1300 °C or lower. The heating temperature is preferably set to 1250 °C or lower.

[Hot Rolling]

Then, the heated steel raw material is rolled to obtain a hot-rolled steel plate. Although the hot rolling conditions are not particularly limited, as will be described later, to start accelerated cooling from the temperature range of no lower than $Ar_3$, namely from the austenite single-phase region, it is preferable to finish the rolling when the temperature is at or above $Ar_3$.

[Accelerated Cooling]

After completion of the hot rolling, the hot-rolled steel plate is subjected to accelerated cooling. At that time, when cooling starts from a dual phase region below $Ar_3$, ferrite is incorporated in the resulting microstructure, causing a decrease in the strength of the steel plate. Therefore, accelerated cooling is started from no lower than $Ar_3$, namely from the austenite single-phase region. The upper limit of the cooling start temperature is $(Ar_3 + 100)$ °C.
In the present disclosure, $Ar_3$ is calculated by:

$$Ar_3 \ (°C) = 910 - 310C - 80Mn - 20Cu - 15Cr - 55Ni - 80Mo$$

, where each element symbol indicates content in mass% of the element in the steel plate and has a value of 0 if the element is not contained in the steel.
In addition, if the cooling end temperature is excessively high, transformation to bainite does not proceed sufficiently and large amounts of pearlite and MA are produced, which may adversely affect toughness. Therefore, the cooling end temperature is set to lower than 300 °C. No upper limit is placed on the lower limit of the cooling end temperature, yet a preferred lower limit is 100 °C.
When the average cooling rate is low, transformation to bainite does not also proceed sufficiently and a large amount of pearlite is produced, which may adversely affect the toughness. Therefore, the average cooling rate is set to 20 °C/s or higher. No upper limit is placed on the average cooling rate, yet a preferred upper limit is 40 °C/s.
By performing accelerated cooling under the above conditions, the resulting steel sheet has a microstructure mainly composed of bainite, and the strength can be improved.

[Reheating Step]

Immediately after completion of the accelerated cooling, reheating is performed to a temperature range of 300 °C to 550 °C at a heating rate of 0.5 °C/s or higher and 10 °C/s or lower. By reheating under the above conditions, movable dislocations are locked by solute C, and as a result, the resulting steel plate may have excellent material homogeneity. This effect is small when the reheating temperature is below 300 °C, resulting in increased variation in properties of the material. On the other hand, when the reheating temperature is above 550 °C, excessive precipitation may occur, causing deterioration in toughness. As used herein, the phrase "immediately after the accelerated cooling" refers to starting reheating at a heating rate from 0.5 °C/s to 10 °C/s within 120 seconds after the completion of the accelerated cooling.
Through the above process, it is possible to produce a steel plate for structural pipes or tubes that has strength of API X100 grade or higher and that is excellent in material homogeneity. In particular, using a combination of transformation strengthening by bainite transformation during the accelerated cooling with strengthening by precipitation with fine carbide precipitated during reheating after the accelerated cooling, it is possible to obtain excellent strength without addition of large amounts of alloying elements. Therefore, in the present disclosure, it is important to satisfy both the accelerated cooling conditions and the reheating conditions.

The steel plate may have any thickness without limitation, yet a preferred thickness range is from 15 mm to 30 mm.

[Steel Pipe or Tube]

A steel pipe or tube can be produced by using the steel plate thus obtained as a material. The steel pipe or tube may be, for example, a structural pipe or tube that is obtainable by forming the steel plate for structural pipes or tubes into a tubular shape in its longitudinal direction, and then joining butting faces by welding. The method of producing a steel pipe or tube is not limited to a particular method, and any method is applicable. For example, a UOE steel pipe or tube may be obtained by forming a steel plate into a tubular shape in its longitudinal direction by U press and O press following a conventional method, and then joining butting faces by seam welding. Preferably, the seam welding is performed by performing tack welding and subsequently submerged arc welding from inside and outside to form at least one layer on each side. The flux used for submerged arc welding is not limited to a particular type, and may be a fused flux or a bonded flux. After the seam welding, expansion is carried out to remove welding residual stress and to improve the roundness of the steel pipe or tube. In the expansion, the expansion ratio (the ratio of the amount of change in the outer diameter before and after expansion of the pipe or tube to the outer diameter of the pipe or tube before expansion) is normally set from 0.3 % to 1.5 %. From the viewpoint of the balance between the roundness improving effect and the capacity required for the expanding device, the expansion rate is preferably from 0.5 % to 1.2 %. Instead of the above-mentioned UOE process, a press bend method, which is a sequential forming process to perform three-point bending repeatedly on a steel plate, may be applied to form a steel pipe or tube having a substantially circular cross-sectional shape before performing seam welding in the same manner as in the above-described UOE process. In the case of the press bend method, as in the UOE process, expansion may be performed after seam welding. In the expansion, the expansion ratio (the ratio of the amount of change in the outer diameter before and after expansion of the pipe or tube to the outer diameter of the pipe or tube before expansion) is normally set from 0.3 % to 1.5 %. From the viewpoint of the balance between the roundness increasing effect and the capacity required for the expanding device, the expansion rate is preferably from 0.5 % to 1.2 %. Optionally, preheating before welding or heat treatment after welding may be performed.

EXAMPLES

Steels having the chemical compositions presented in Table 1 (Steels A to M, each with the balance consisting of Fe and inevitable impurities) were prepared by steelmaking and formed into slabs by continuous casting. The obtained slabs were heated and hot-rolled, and immediately cooled using a water cooling type accelerated-cooling apparatus to produce steel plates with a thickness of 20 mm (Nos. 1 to 19). The production conditions of each steel plate are presented in Table 2. For each obtained steel plate, the area fraction of martensite austenite constituent as well as bainite in the microstructure and the mechanical properties were evaluated as described below. The evaluation results are presented in Table 3.

The area fraction of martensite austenite constituent as well as bainite was evaluated by mirror-polishing a sample taken from the mid-thickness part, etching the mirror-polished surface with nital, and observing ten or more locations randomly selected on the surface under a scanning electron microscope (at 2000 times magnification).

Among the mechanical properties, 0.5 % yield strength (YS) and tensile strength (TS) were measured by preparing a full-thickness test piece in a direction perpendicular to a rolling direction (C direction) and in the rolling direction (L direction). In measurement, full-thickness test pieces were sampled from each obtained steel plate in the C and L directions, respectively, and then conducting a tensile test on each test piece in accordance with JIS Z 2241 (1998).

As for Charpy properties, among the mechanical properties, three 2mm V notch Charpy test pieces were sampled from the mid-thickness part with their longitudinal direction parallel to the rolling direction, and Charpy absorbed energy at -10 °C ($vE_{-10\,°C}$) was measured and then the average values were calculated.

For evaluation of heat affected zone (HAZ) toughness, a test piece to which heat hysteresis corresponding to heat input of 20 kJ/cm to 50 kJ/cm was applied by a reproducing apparatus of weld thermal cycles was prepared and subjected to a Charpy impact test. Measurements were made in the same manner as in the evaluation of Charpy absorption energy at -10 °C described above, and the case of Charpy absorption energy at -10 °C being 100 J or more was evaluated as "Good", and less than 100 J as "Poor".

Further, for evaluation of PWHT resistance, PWHT was performed on each steel plate using a gas atmosphere furnace. At this time, heat treatment was performed on each steel plate at 600 °C for 2 hours, after which the steel plate was removed from the furnace and cooled to room temperature by air cooling. Each steel plate subjected to PWHT was measured for 0.5 % YS, TS, and $vE_{-10\,°C}$ in the rolling direction in the same manner as in the above-described measurements before PWHT.

As can be seen from Table 3, examples (Nos. 1 to 7) which satisfy the conditions disclosed herein each exhibited, in a state before subjection to PWHT, excellent strength such that yield strength (0.5 % $YS_C$) was 690 MPa or more and tensile strength ($TS_C$) was 760 MPa or more, excellent material homogeneity such that the difference ($TS_C - TS_L$) between tensile strength ($TS_C$) in a direction orthogonal to a rolling direction and tensile strength ($TS_L$) in the rolling direction was 30 MPa or less, and excellent mechanical properties even after subjection to PWHT at a temperature as high as 600 °C. Moreover, the steel plates according to our examples exhibited good Charpy properties (toughness) such that $vE_{-10\,°C}$ was 200 J or more, as well as good HAZ toughness.

On the other hand, in comparative examples (Nos. 8 to 20) which do not satisfy the conditions disclosed herein, exhibited inferior mechanical properties and material homogeneity before and/or after subjection to PWHT. For example, Nos. 8, 12, and 13 were inferior in strength of base metal or toughness of base metal, although their steel compositional ranges met the conditions of the present disclosure. The reason is considered to be that fine carbides were not properly dispersed and precipitated because the production conditions did not satisfy the conditions disclosed herein. For No. 9, although its steel compositional range was within the disclosed range, the cooling start temperature did not satisfy the conditions of the present disclosure and ferrite was incorporated in the microstructure of the steel plate, and, as a result, exhibited inferior mechanical properties before and after subjection to PWHT. For Nos. 10 and 11, although their steel compositional ranges were within the disclosed range, the area fraction of martensite austenite constituent in the microstructure of the steel plate was greater than 3.0%, and, as a result, exhibited inferior Charpy properties in the base steel plate and lower strength after subjection to PWHT. On the other hand, for Nos. 14 to 19, since the steel compositional range was outside the range of the present disclosure, at least one of strength of base metal, Charpy properties, HAZ toughness, or strength after subjection to PWHT was inferior.

Table 1

| Steel ID | Chemical composition (mass%) * | | | | | | | | | | | | | | | | | | Ti/N | Ceq (mass%) | X (mass%) | Y (atomic%) | Ar₃ (°C) | Remarks |
|---|---|---|---|---|---|---|---|---|---|---|---|---|---|---|---|---|---|---|---|---|---|---|---|---|
| | C | Si | Mn | P | S | Mo | Ti | Nb | V | Al | Cu | Ni | Cr | Ca | REM | B | O | N | | | | | | |
| A | 0.070 | 0.26 | 2.05 | 0.005 | 0.0006 | 0.29 | 0.014 | 0.026 | 0.041 | 0.032 | - | - | - | - | - | - | 0.0026 | 0.004 | 3.5 | 0.48 | 0.27 | 0.246 | 701 | Conforming steel |
| B | 0.068 | 0.16 | 1.85 | 0.008 | 0.0008 | 0.13 | 0.013 | 0.023 | 0.055 | 0.035 | 0.20 | 0.20 | 0.11 | - | 0.0012 | - | 0.0027 | 0.005 | 2.6 | 0.46 | 0.20 | 0.165 | 714 | |
| C | 0.064 | 0.20 | 1.98 | 0.005 | 0.0006 | 0.20 | 0.009 | 0.056 | 0.045 | 0.020 | 0.15 | 0.26 | - | - | - | - | 0.0024 | 0.003 | 3.0 | 0.47 | 0.22 | 0.198 | 698 | |
| D | 0.060 | 0.19 | 1.92 | 0.005 | 0.0006 | 0.31 | 0.010 | 0.032 | 0.036 | 0.034 | - | - | 0.16 | - | - | - | 0.0025 | 0.004 | 2.5 | 0.48 | 0.25 | 0.251 | 711 | |
| E | 0.065 | 0.12 | 1.75 | 0.008 | 0.0008 | 0.30 | 0.012 | 0.043 | - | 0.035 | - | - | 0.30 | 0.0015 | - | 0.0004 | 0.0028 | 0.004 | 3.0 | 0.48 | 0.26 | 0.215 | 721 | |
| F | 0.064 | 0.08 | 2.14 | 0.008 | 0.0008 | 0.23 | 0.014 | 0.012 | 0.024 | 0.037 | 0.20 | 0.09 | 0.02 | - | - | - | 0.0027 | 0.005 | 2.8 | 0.49 | 0.22 | 0.184 | 691 | |
| G | 0.078 | 0.24 | 1.66 | 0.005 | 0.0006 | 0.26 | 0.019 | 0.056 | 0.005 | 0.041 | 0.20 | 0.21 | 0.20 | 0.0023 | - | - | 0.0024 | 0.005 | 3.8 | 0.48 | 0.27 | 0.201 | 714 | |
| H | 0.068 | 0.25 | 1.86 | 0.006 | 0.0006 | 0.31 | 0.012 | 0.031 | 0.010 | 0.028 | - | - | - | - | - | - | 0.0018 | 0.004 | 3.0 | 0.44 | 0.29 | 0.224 | 715 | |
| I | 0.071 | 0.09 | 1.76 | 0.005 | 0.0005 | 0.34 | 0.015 | 0.043 | 0.052 | 0.032 | 0.10 | 0.10 | - | - | - | - | 0.0020 | 0.005 | 3.0 | 0.46 | 0.30 | 0.298 | 712 | Comparative steel |
| J | 0.065 | 0.19 | 1.78 | 0.005 | 0.0006 | 0.29 | 0.022 | 0.038 | 0.030 | 0.053 | 0.30 | 0.22 | - | - | - | - | 0.0026 | 0.004 | 5.5 | 0.46 | 0.27 | 0.250 | 706 | |
| K | 0.061 | 0.15 | 1.74 | 0.005 | 0.0006 | 0.29 | 0.008 | 0.035 | 0.010 | 0.031 | - | - | 0.28 | - | - | - | 0.0026 | 0.004 | 2.0 | 0.47 | 0.25 | 0.210 | 724 | |
| L | 0.058 | 0.14 | 1.84 | 0.008 | 0.0008 | 0.25 | 0.011 | 0.071 | - | 0.033 | 0.20 | 0.18 | - | - | - | - | 0.0029 | 0.004 | 2.8 | 0.44 | 0.25 | 0.201 | 711 | |
| M | 0.055 | 0.15 | 1.87 | 0.006 | 0.0006 | 0.20 | 0.013 | 0.014 | - | 0.035 | 0.20 | 0.19 | 0.20 | - | - | - | 0.0027 | 0.004 | 3.3 | 0.47 | 0.20 | 0.140 | 710 | |

* The balance consists of Fe and inevitable impurities.

Ceq = C + Mn/6 + (Cu+Ni)/15 + (Cr+Mo+V)/5 [Each element symbol indicates content in mass% of the element and has a value of 0 if the element is not contained.]

X = (C+Mo/5)/Ceq [Each element symbol indicates content in mass% of the element and has a value of 0 if the element is not contained.]

Y = [Mo] + [Ti] + [Nb] + [V] [[M] represents the content in atomic% of element M and has a value of 0 if the element is not contained.]

Ar₃ = 910 - 310C - 80Mn - 20Cu - 15Cr - 55Ni - 80Mo [Each element symbol indicates content in mass% of the element and has a value of 0 if the element is not contained.]

Table 2

| No. | Steel ID | Heating temp. (°C) | Hot rolling | Accelerated cooling | | | Reheating | | | Remarks |
|---|---|---|---|---|---|---|---|---|---|---|
| | | | Rolling finish temp. (°C) | Cooling start temp. (°C) | Cooling rate (°C/s) | Cooling end temp. (°C) | Reheating apparatus | Heating rate (°C/s) | Reheating temp. (°C) | |
| 1 | A | 1250 | 760 | 720 | 30 | 280 | induction heating furnace | 5 | 450 | Example |
| 2 | B | 1180 | 770 | 740 | 35 | 260 | induction heating furnace | 6 | 450 | |
| 3 | C | 1180 | 750 | 710 | 35 | 250 | induction heating furnace | 7 | 480 | |
| 4 | D | 1180 | 780 | 730 | 40 | 250 | induction heating furnace | 5 | 350 | |
| 5 | E | 1200 | 760 | 720 | 45 | 200 | gas-fired furnace | 1 | 480 | |
| 6 | F | 1150 | 750 | 720 | 45 | 220 | induction heating furnace | 4 | 350 | |
| 7 | G | 1190 | 770 | 740 | 35 | 240 | induction heating furnace | 5 | 450 | |
| 8 | C | <u>1050</u> | 780 | 750 | 40 | 190 | induction heating furnace | 7 | 450 | Comparative Example |
| 9 | C | 1150 | 750 | <u>680</u> | 40 | 250 | induction heating furnace | 8 | 440 | |
| 10 | C | 1150 | 780 | 760 | <u>3</u> | 280 | induction heating furnace | 8 | 450 | |
| 11 | C | 1150 | 760 | 730 | 25 | <u>480</u> | induction heating furnace | 5 | 550 | |
| 12 | F | 1150 | 770 | 730 | 30 | 240 | induction heating furnace | 6 | <u>650</u> | |
| 13 | F | 1150 | 760 | 730 | 40 | 220 | induction heating furnace | 7 | <u>280</u> | |
| 14 | F | 1150 | 760 | 730 | 40 | 250 | - | - | - | |
| 15 | <u>H</u> | 1150 | 760 | 740 | 40 | 210 | induction heating furnace | 4 | 400 | |
| 16 | <u>I</u> | 1200 | 750 | 740 | 35 | 240 | induction heating furnace | 8 | 380 | |
| 17 | <u>J</u> | 1180 | 760 | 730 | 40 | 270 | gas-fired furnace | 1.0 | 350 | |
| 18 | <u>K</u> | 1200 | 780 | 740 | 40 | 260 | induction heating furnace | 6 | 450 | |
| 19 | <u>L</u> | 1200 | 760 | 720 | 35 | 250 | induction heating furnace | 6 | 350 | |
| 20 | <u>M</u> | 1150 | 760 | 720 | 35 | 260 | induction heating furnace | 6 | 450 | |

Table 3

| No. | Steel ID | Microstructure | | | Mechanical properties (before PWHT) | | | | | | | Mechanical properties (after PWHT) | | | Remarks |
|---|---|---|---|---|---|---|---|---|---|---|---|---|---|---|---|
| | | Area fraction of MA* (%) | Area fraction of B* (%) | Residual microstructural constituents* | Direction perpendicular to rolling direction (C) | | Rolling direction (L) | | Difference between C and L | $vE_{-10°C}$ (J) | HAZ toughness | 0.5% YS (MPa) | TS (MPa) | $vE_{-10°C}$ (J) | |
| | | | | | 0.5% YSc (MPa) | TSc (MPa) | 0.5% YSL (MPa) | TSL (MPa) | TSc − TSL (MPa) | | | | | | |
| 1 | A | 2.1 | 96 | M | 716 | 830 | 708 | 814 | 16 | 249 | Good | 744 | 818 | 254 | Example |
| 2 | B | 1.2 | 99 | - | 707 | 810 | 703 | 793 | 17 | 265 | Good | 718 | 799 | 265 | |
| 3 | C | 1.9 | 98 | - | 702 | 807 | 694 | 798 | 9 | 260 | Good | 720 | 793 | 272 | |
| 4 | D | 2.1 | 92 | M | 712 | 828 | 713 | 818 | 10 | 253 | Good | 747 | 821 | 246 | |
| 5 | E | 0.8 | 99 | - | 690 | 811 | 690 | 803 | 8 | 271 | Good | 725 | 798 | 280 | |
| 6 | F | 1.0 | 95 | M | 721 | 829 | 715 | 809 | 20 | 268 | Good | 743 | 826 | 279 | |
| 7 | G | 1.4 | 99 | - | 713 | 829 | 702 | 819 | 10 | 258 | Good | 738 | 818 | 262 | |
| 8 | C | 1.9 | 95 | M | 693 | 758 | 699 | 749 | 9 | 260 | Good | 684 | 758 | 269 | |
| 9 | C | 2.4 | 86 | F, M | 686 | 789 | 682 | 763 | 26 | 233 | Good | 703 | 784 | 245 | Comparative Example |
| 10 | C | 2.3 | 89 | F, P | 684 | 811 | 670 | 784 | 27 | 186 | Good | 690 | 765 | 211 | |
| 11 | C | 3.8 | 96 | - | 670 | 823 | 662 | 801 | 22 | 168 | Good | 681 | 779 | 209 | |
| 12 | F | 0.9 | 99 | - | 761 | 831 | 768 | 829 | 2 | 193 | Good | 739 | 822 | 186 | |
| 13 | F | 2.2 | 95 | M | 681 | 834 | 675 | 801 | 33 | 249 | Good | 731 | 804 | 267 | |
| 14 | F | 2.8 | 93 | M | 713 | 849 | 701 | 812 | 37 | 198 | Good | 724 | 811 | 213 | |
| 15 | H | 2.8 | 97 | - | 645 | 752 | 636 | 731 | 21 | 279 | Good | 663 | 727 | 273 | |
| 16 | I | 4.6 | 95 | - | 722 | 843 | 714 | 822 | 21 | 189 | Poor | 743 | 812 | 237 | |
| 17 | J | 2.4 | 98 | - | 700 | 812 | 693 | 799 | 13 | 254 | Poor | 719 | 789 | 261 | |
| 18 | K | 0.9 | 95 | M | 701 | 808 | 698 | 780 | 28 | 262 | Poor | 728 | 801 | 274 | |
| 19 | L | 1.6 | 98 | - | 681 | 752 | 677 | 746 | 6 | 295 | Good | 673 | 755 | 286 | |
| 20 | M | 1.7 | 98 | - | 685 | 772 | 680 | 758 | 14 | 274 | Good | 681 | 748 | 280 | |

* MA: martensite austenite constituent, B: bainite, M: martensite, F: ferrite, P: Pearlite

INDUSTRIAL APPLICABILITY

According to the present disclosure, it is possible to provide, as a high-strength steel plate of API X100 grade or higher, a steel plate for structural pipes or tubes that exhibits high strength in a rolling direction and that has only a small difference between strength in the rolling direction and strength in a direction perpendicular to the rolling diraction (exhibits excellent material homogeneity), without addition of large amounts of alloying elements. A structural pipe or tube formed from the steel plate maintains excellent mechanical properties even after subjection to PWHT, and thus is extremely useful as a structural pipe or tube for a conductor casing steel pipe or tube, a riser steel pipe or tube, and so on that can be subjected to PWHT.

**Claims**

1. A steel plate for structural pipes or tubes, comprising:
   a chemical composition that contains, in mass%,
   C: 0.060 % to 0.100 %,
   Si: 0.01 % to 0.50 %,
   Mn: 1.50 % to 2.50 %,
   Al: 0.080 % or less,
   Mo: 0.10 % to 0.50 %,
   Ti: 0.005 % to 0.025 %,
   Nb: 0.005 % to 0.080 %,
   N: 0.001 % to 0.010 %,
   O: 0.0050 % or less,
   P: 0.010 % or less,
   S: 0.0010 % or less,
   optionally V: 0.005 % to 0.100 %,
   optionally one or more selected from the group consisting of

   Cu: 0.50 % or less,
   Ni: 0.50 % or less,
   Cr: 0.50 % or less,
   Ca: 0.0005 % to 0.0035 %,
   REM: 0.0005 % to 0.0100 %, and
   B: 0.0020 % or less, and

   the balance consisting of Fe and inevitable impurities, with the chemical composition satisfying a set of conditions including:

   a ratio Ti/N of the Ti content in mass% to the N content in mass% being 2.5 or more and 4.0 or less;
   a carbon equivalent $C_{eq}$ as defined by the following Expression (1) being 0.45 or more and 0.50 or lower;
   X as defined by the following Expression (2) being 0.10 or more and less than 0.30; and
   Y as defined by the following Expression (3) being 0.15 or more and 0.50 or less:

$$C_{eq} = C + Mn/6 + (Cu + Ni)/15 + (Cr + Mo + V)/5 \qquad (1),$$

   where each element symbol indicates content in mass% of the element in the steel plate and has a value of 0 if the element is not contained in the steel plate,

$$X = (C + Mo/5)/C_{eq} \qquad (2),$$

$$Y = [Mo] + [Ti] + [Nb] + [V] \qquad (3),$$

   where [M] represents the content in atomic% of element M in the steel plate and [M] = 0 when the element M is not contained in the steel plate; and
   a microstructure that contains bainite in an area fraction of 90 % or more and martensite austenite constituent in an area fraction of less than 3.0 %,

wherein the steel plate satisfies a set of conditions including:

a tensile strength measured by a tensile test in accordance with JIS Z 2241 (1998) in a rolling direction $TS_L$ being 760 MPa or more; and
$TS_C$ - $TS_L$ being 30 MPa or less in terms of absolute value, where $TS_C$ denotes a tensile strength measured by a tensile test in accordance with JIS Z 2241 (1998) in a direction orthogonal to the rolling direction.

2. A method of producing a steel plate for structural pipes or tubes, comprising at least:

heating a steel raw material having the chemical composition as recited in claim 1 to a heating temperature of 1100 °C to 1300 °C;
hot-rolling the heated steel raw material to obtain a hot-rolled steel plate;
accelerated-cooling the hot-rolled steel plate under a set of conditions including, a cooling start temperature being no lower than $Ar_3$ as defined below and ($Ar_3$ + 100) °C or lower, a cooling end temperature being lower than 300 °C, and an average cooling rate being 20 °C/s or higher:

$$Ar_3 \ (°C) = 910 - 310 \ C - 80 \ Mn - 20 \ Cu - 15 \ Cr - 55 \ Ni - 80 \ Mo,$$

where each element symbol indicates content in mass% of the element in the steel plate and has a value of 0 if the element is not contained in the steel plate; and
within 120 seconds after the accelerated cooling, starting reheating the steel plate to 300 °C to 550 °C at a heating rate from 0.5 °C/s to 10 °C/s,
wherein the temperature is the average temperature in the thickness direction of the steel plate.

3. A structural pipe or tube formed from the steel plate for structural pipes or tubes as recited in claim 1.

4. A method of producing a structural pipe or tube by
forming the steel plate for structural pipes or tubes as recited in claim 1 into a tubular shape in its longitudinal direction, and
then joining butting faces by welding from inside and outside to form at least one layer on each side along the longitudinal direction.

**Patentansprüche**

1. Stahlplatte für Konstruktionsleitungen oder -rohre, umfassend:
eine chemische Zusammensetzung, in Massen-% enthaltend

C: 0,060 % bis 0,100 %,
Si: 0,01 % bis 0,50 %,
Mn: 1,50 % bis 2,50 %,
Al: 0,080 % oder weniger,
Mo: 0,10 % bis 0,50 %,
Ti: 0,005 % bis 0,025 %,
Nb: 0,005 % bis 0,080 %,
N: 0,001 % bis 0,010 %,
O: 0,0050 % oder weniger,
P: 0,010 % oder weniger,
S: 0,0010 % oder weniger,
gegebenenfalls V: 0,005 % bis 0,100 %,
gegebenenfalls eines oder mehrere, ausgewählt aus der Gruppe, bestehend aus

Cu: 0,50 % oder weniger,
Ni: 0,50 % oder weniger,
Cr: 0,50 % oder weniger,
Ca: 0,0005 % bis 0,0035 %,

REM: 0,0005 % bis 0,0100 % und
B: 0,0020 % oder weniger, und

einem Rest, bestehend aus Fe und unvermeidbaren Verunreinigungen, wobei die chemische Zusammensetzung eine Reihe von Bedingungen erfüllt, einschließlich:

einem Verhältnis Ti/N des Ti-Gehalts in Massen-% zu dem N-Gehalt in Massen-% von 2,5 oder mehr und 4,0 oder weniger;
einem wie in der nachfolgenden Gleichung (1) definierten Kohlenstoffäquivalent $C_{eq}$ von 0,45 oder mehr und 0,50 oder weniger;
einem wie in der nachfolgenden Gleichung (2) definierten X von 0,10 oder mehr und weniger als 0,30; und
einem wie in der nachfolgenden Gleichung (3) definierten Y von 0,15 oder mehr und 0,50 oder weniger:

$$C_{eq} = C + Mn/6 + (Cu + Ni)/15 + (Cr + Mo + V)/5 \qquad (1),$$

wobei jedes Elementsymbol den Gehalt des Elements in der Stahlplatte in Massen-% angibt und einen Wert von 0 hat, falls das Element nicht in der Stahlplatte enthalten ist,

$$X = (C + Mo/5)/C_{eq} \qquad (2),$$

$$Y = [Mo] + [Ti] + [Nb] + [V] \qquad (3),$$

wobei [M] den Gehalt des Elements M in der Stahlplatte in Atom-% angibt und [M] = 0, falls das Element M nicht in der Stahlplatte enthalten ist; und
eine Mikrostruktur, die Bainit in einem Flächenanteil von 90 % oder mehr und einen Martensit-Austenit-Bestandteil in einem Flächenanteil von weniger als 3,0 % enthält, worin die Stahlplatte eine Reihe von Bedingungen erfüllt, einschließlich:

eine durch einen Zugtest gemäß JIS Z 2241 (1998) in einer Walzrichtung $TS_L$ gemessene Zugfestigkeit von 760 MPa oder mehr; und
$TS_C$ - $TS_L$ in Bezug auf den absoluten Wert 30 MPa oder weniger beträgt, wobei $TS_C$ eine durch einen Zugtest gemäß JIS Z 2241 (1998) in einer zur Walzrichtung orthogonalen Richtung gemessene Zugfestigkeit bezeichnet.

2. Verfahren zur Herstellung einer Stahlplatte für Konstruktionsleitungen oder -rohre, mindestens umfassend:

Erwärmen eines Stahlrohmaterials mit einer wie in Anspruch 1 definierten Zusammensetzung auf eine Erwärmungstemperatur von 1100°C bis 1300°C;
Warmwalzen des erwärmten Stahlrohmaterials, so dass eine warmgewalzte Stahlplatte erhalten wird;
beschleunigtes Abkühlen der warmgewalzten Stahlplatte unter einer Reihe von Bedingungen, einschließlich einer Abkühlstarttemperatur, die nicht niedriger als $Ar_3$ ist, wie nachstehend definiert, und $(Ar_3 + 100)$°C oder niedriger ist, wobei eine Abkühlendtemperatur niedriger als 300°C ist und eine durchschnittliche Abkühlrate 20°C/s oder höher beträgt:

$$Ar_3 \ (°C) = 910 - 310 \ C - 80 \ Mn - 20 \ Cu - 15 \ Cr - 55 \ Ni - 80 \ Mo,$$

wobei jedes Elementsymbol den Gehalt des Elements in der Stahlplatte in Massen-% angibt und einen Wert von 0 hat, falls das Element nicht in der Stahlplatte enthalten ist; und

innerhalb von 120 Sekunden nach dem beschleunigten Abkühlen das Wiedererwärmen der Stahlplatte von 300°C auf 550°C mit einer Erwärmungsrate von 0,5°C/s auf 10°C/s gestartet wird,
worin die Temperatur die durchschnittliche Temperatur in der Dickenrichtung der Stahlplatte darstellt.

3. Konstruktionsleitung oder -rohr, gebildet aus der Stahlplatte für Konstruktionsleitungen oder -rohre wie in Anspruch 1 definiert.

4. Verfahren zur Herstellung einer Konstruktionsleitung oder eines Konstruktionsrohres durch
   Formen der wie in Anspruch 1 definierten Stahlplatte für Konstruktionsleitungen oder -rohre zu einer Rohrform in ihrer Längsrichtung und
   anschließendes Verbinden der Stoßflächen durch Schweißen von innen und außen, so dass auf jeder Seite mindestens eine Schicht entlang der Längsrichtung gebildet wird.

**Revendications**

1. Tôle d'acier pour tuyaux ou tubes structurels, comprenant :

   une composition chimique qui contient, en % en masse,

   C : 0,060 % à 0,100 %,
   Si : 0,01% à 0,50 %,
   Mn : 1,50 % à 2,50 %,
   Al : 0,080 % ou moins,
   Mo: 0,10%à 0,50%,
   Ti : 0,005 % à 0,025 %,
   Nb: 0,005 % à 0,080 %,
   N : 0,001 % à 0,010 %,
   O : 0,0050 % ou moins,
   P : 0,010 % ou moins,
   S : 0,0010 % ou moins,
   facultativement V : 0,005 % à 0,100 %,
   facultativement un ou plusieurs éléments choisis dans le groupe consistant en
   Cu : 0,50 % ou moins,
   Ni : 0,50 % ou moins,
   Cr : 0,50 % ou moins,
   Ca : 0,0005 % à 0,0035 %,
   REM : 0,0005 % à 0,0100 %, et
   B : 0,0020 % ou moins, et

   le reste consistant en du Fe et des impuretés inévitables, la composition chimique satisfaisant un jeu de conditions incluant :

   un rapport Ti/N de la teneur en Ti en % en masse sur la teneur en N en % en masse étant de 2,5 ou plus et 4,0 ou moins ;
   un équivalent carbone $C_{eq}$ tel que défini par l'expression (1) suivante étant de 0,45 ou plus et 0,50 ou moins ;
   X tel que défini par l'expression (2) suivante étant de 0,10 ou plus et de moins de 0,30 ; et
   Y tel que défini par l'expression (3) suivante étant de 0,15 ou plus et 0,50 ou moins :

$$C_{eq} = C + Mn/6 + (Cu + Ni)/15 + (Cr + Mo + V)/5 \qquad (1),$$

   où chaque symbole d'élément indique la teneur en % en masse de l'élément dans la tôle d'acier et a une valeur de 0 si l'élément n'est pas contenu dans la tôle d'acier,

$$X = (C + Mo/5)/C_{eq} \qquad (2),$$

$$Y = [Mo] + [Ti] + [Nb] + [V] \qquad (3),$$

où [M] représente la teneur en % atomique de l'élément M dans la tôle d'acier et [M] = 0 lorsque l'élément M n'est pas contenu dans la tôle d'acier ; et

une microstructure qui contient de la bainite dans une fraction d'aire de 90 % ou plus et un constituant martensite austénite dans une fraction d'aire de moins de 3,0 %,

dans laquelle la tôle d'acier satisfait un jeu de conditions incluant :

une résistance à la traction mesurée par un essai de traction en conformité avec la norme JIS Z 2241 (1998) dans une direction de laminage $TS_L$ étant de 760 MPa ou plus ; et

$TS_C$ - $TS_L$ étant de 30 MPa ou moins en termes de valeur absolue, où $TS_C$ désigne une résistance à la traction mesurée par un essai de traction en conformité avec la norme JIS Z 2241 (1998) dans une direction orthogonale à la direction de laminage.

2. Procédé de production d'une tôle d'acier pour tuyaux ou tubes structurels, comprenant au moins :

le chauffage d'une matière première d'acier ayant la composition chimique telle que précisée dans la revendication 1 à une température de chauffage de 1100 °C à 1 300 °C ;

le laminage à chaud de la matière première d'acier chauffée pour obtenir une tôle d'acier laminée à chaud ;

le refroidissement accéléré de la tôle d'acier laminée à chaud dans un jeu de conditions incluant, une température de départ de refroidissement non inférieure à $Ar_3$ telle que définie ci-dessous et ($Ar_3$ + 100) °C ou moins, une température de fin de refroidissement inférieure à 300 °C, et une cadence de refroidissement moyenne de 20 °C/s ou plus :

$$Ar_3 \, (°C) = 910 - 310\,C - 80\,Mn - 20\,Cu - 15\,Cr - 55\,Ni - 80\,Mo,$$

où chaque symbole d'élément indique la teneur en % en masse de l'élément dans la tôle d'acier et a une valeur de 0 si l'élément n'est pas contenu dans la tôle d'acier ; et

en moins de 120 secondes après le refroidissement accéléré, le démarrage d'un réchauffement de la tôle d'acier à 300 °C à 550 °C à une cadence de chauffage de 0,5 °C/s à 10 °C/s,

dans lequel la température est la température moyenne dans la direction de l'épaisseur de la tôle d'acier.

3. Tuyau ou tube structurel formé à partir de la tôle d'acier pour tuyaux ou tubes structurels telle que précisée dans la revendication 1.

4. Procédé de production d'un tuyau ou tube structurel par
la formation de la tôle d'acier pour tuyaux ou tubes structurels telle que précisée dans la revendication 1 en une forme tubulaire dans sa direction longitudinale, et
puis la jonction de faces en aboutement par soudage depuis l'intérieur et l'extérieur pour former au moins une couche sur chaque côté suivant la direction longitudinale.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1150188 A
- JP 2001158939 A
- JP 2006307324 A